# EUROPEAN PATENT APPLICATION

(11) **EP 4 818 108 A1**
(43) Date of publication of application: **07.10.2026**
(21) Application number: 26164952.9
(22) Date of filing: 16.03.2026
(51) Int. Cl.: B66F 17/00, B66F 9/075, B66F 9/24, B66F 9/065, G06V 10/82, G06V 20/20, G06V 20/58, G06V 20/10

(54) **MULTIFUNCTIONAL LIFTING VEHICLE AND RELATED OBSTACLE DETECTION AND DISPLAY SYSTEM**

(30) Priority: 04.04.2025 IT 202500007308
(71) Applicant: Merlo Project S.r.l., I-12010 - Cervasca (Cuneo) (IT)
(72) Inventor: CONTESSINI, Felice, I-12010 Cervasca (Cuneo) (IT); LOPEZ, Federico, I-12010 Cervasca (Cuneo) (IT)
(74) Representative: Buzzi, Notaro & Antonielli d'Oulx S.p.A.

(57) **Abstract**

Multifunctional lifting vehicle (1) comprising:
- a base frame (2),
- a lifting unit (5) including at least one operating arm (6) provided with a coupling (7) for mounting an attachment (8),
- a control system comprising at least one electronic control unit (E) and a plurality of sensors (11, 12, 20, 21, 23, 24) arranged to acquire a plurality of parameters relating to a load and/or to parts of the vehicle (1), such as, for example, the arm (6),
- an obstacle detection and display system comprising a vision system, at least one electronic module (F) configured to process a plurality of data acquired by the vision system, and a display device (19) operatively connected to said electronic module (F), configured and programmed to generate a visualization of the surrounding environment.

## Description

### Field of the Invention

The present invention relates to a multifunctional lifting vehicle comprising:
- a base frame,
- a lifting unit including at least one operating arm provided with a coupling for mounting an attachment,
- a control system comprising at least one electronic control unit and a plurality of sensors arranged to acquire a plurality of parameters relating to a load and/or to parts of the vehicle such as, for example, the arm.

### Prior art

Lifting vehicles of the type indicated above can be equipped with different types of attachments, such as forks, buckets, aerial platforms, etc. During operation, the load applied to the attachment located at the end of the arm may vary widely.

At present, the operator controlling the vehicle (from inside the driving cab or from a remote station) may in some cases have a view obstructed by objects interposed along the field of view. In particular, external objects or parts of the vehicle itself (such as, for example, the front uprights forming the driving cab or other parts of the frame) may prevent full visibility of the surrounding environment from various angles, thereby generating non-negligible difficulties in manoeuvring the vehicle or in handling the load lifted at the end of the lifting arm, while meeting safety requirements.

There is therefore a need to provide an improved solution in this respect capable of overcoming the above drawbacks and improving upon documents EP4406908, US20240424896 and EP3606861.

### Object of the Invention

The object of the present invention is to overcome the technical problems described above.

In particular, an object of the present invention is to provide a lifting vehicle of the type indicated above, arranged to assist the operator in driving and in managing the handling of the machine, including under specific circumstances that give rise to non-visible areas and difficult-to-predict scenarios which may be critical for safety.

A further object of the invention is to provide such a solution by means that are relatively simple and low-cost, while not requiring particular knowledge from the operator driving said vehicle from the cab or remotely.

### Summary of the Invention

The object of the present invention is achieved by a lifting vehicle having the features forming the subject matter of one or more of the claims that follow, which form an integral part of the technical teaching provided herein in relation to the invention.

In particular, the object of the invention is achieved by a multifunctional lifting vehicle having the features set forth in the appended claim 1.

### Brief description of the figures

Further features and advantages of the invention will become apparent from the description that follows with reference to the accompanying drawings, provided purely by way of non-limiting example, in which:
- Figure 1 is a schematic side view of a multifunctional lifting vehicle according to an embodiment of the present invention,
- Figure 2 is a schematic view of the vehicle showing different detection areas of a vision system,
- Figure 3 illustrates a display device according to a possible embodiment, and
- Figures 4-6 are further schematic views illustrating some examples of information that can be displayed to an operator by means of a display device.

### Detailed Description

In the following description, various specific details are set forth to provide a thorough understanding of examples of one or more embodiments. The embodiments may be practiced without one or more of the specific details, or with other methods, components, materials, etc. In other cases, known structures, materials, or operations are not shown or described in detail so as not to obscure various aspects of the embodiments.

Reference to "an embodiment" within this description indicates that a particular configuration, structure, or feature described in connection with the embodiment is included in at least one embodiment. Thus, phrases such as "in an embodiment", possibly appearing in different places in this description, do not necessarily refer to the same embodiment.

Moreover, particular configurations, structures, or features may be combined as appropriate in one or more embodiments and/or associated with the embodiments in a manner different from that illustrated herein, so that, for example, a feature exemplified herein in relation to one figure may be applied to one or more embodiments exemplified in a different figure.

The references illustrated herein are provided merely for convenience and therefore do not limit the scope of protection or the extent of the embodiments.

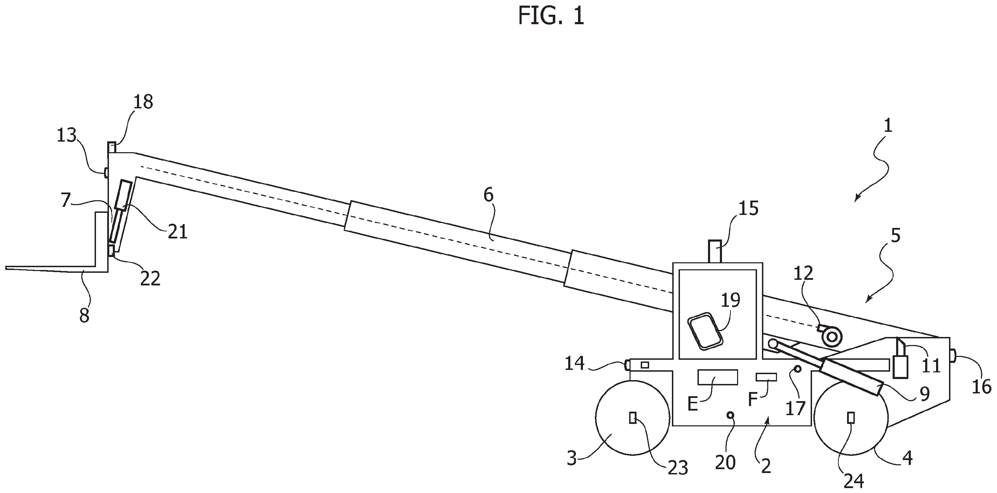

With reference to Figure 1, reference numeral 1 indicates a multifunctional lifting vehicle according to a preferred embodiment of the present invention.

The vehicle 1 comprises a base frame 2 provided with front supporting means 3 and rear supporting means 4, for example wheels and/or stabilizers. The base frame 2 can advantageously be made in the form of a fixed, self-propelled, or rotating frame. The vehicle 1 may optionally be provided with a slewing turret, i.e., a rotating unit that enables independent orientation of the driving cab.

According to a further feature, the vehicle 1 further comprises a lifting unit 5 comprising at least one operating arm 6 articulated in the rear section of the frame 2 about a transverse axis. The lifting unit 5 may advantageously comprise a single operating arm 6 or two arms articulated with each other. One or more of said arms 6 may be configured as telescopic, as shown in Figure 1, so as to vary the outreach with respect to the base frame 2.

Still with reference to Figure 1, the lifting unit 5 is provided at a terminal end thereof with a coupling 7 for connecting attachments 8 of different types, such as forks, buckets, aerial platforms, etc.

In a manner known per se, the vehicle 1 further comprises an actuating system configured to actuate the lifting unit 5 carrying the attachment 8. In one or more embodiments, the actuating system comprises at least one lifting/lowering cylinder 9 having an end articulated to the frame 2 and to the arm 6. In one or more embodiments, the actuating system may further comprise a hydraulic control circuit including a main pump driven by a vehicle engine. Details relating to the hydraulic circuit are not described herein, since they are well known to the person skilled in the art.

According to a further feature, the multifunctional lifting vehicle 1 comprises a control system associated with the actuating system of the vehicle 1. The control system comprises an electronic control unit E arranged to control, among other things, respective operating valves of a hydraulic circuit for actuating the lifting unit 5, also as a function of a plurality of sensors detailed below.

According to a further relevant feature, the control system comprises at least some of the following sensors:
- sensors 11, 12 detecting, respectively, the tilt angle of the arm and the extension length of the telescopic portion of the arm 6 (also referred to as extension);
- at least one sensor 21 for determining the tilt angle of the attachment mounted at the end of the arm (attachment angle sensor);
- steering-angle sensors 23, 24 arranged to detect the steering angle of the front and rear supporting means 3, 4;
- one or more sensors 20 for detecting the speed and direction of travel of the vehicle 1;
- sensors for detecting the extension of the stabilizers;
- at least one sensor for detecting the rotation angle of an upper portion of the frame 2.

According to a further feature, the control system may comprise a recognition unit 22 adapted to recognize the type of attachment applied to the arm 6. The recognition unit 22 may, for example, be based on RFID technology.

According to a further feature, the electronic control unit E is configured to define the overall dimensions and the working area of the vehicle 1 as a function of the various operating parameters of the vehicle, including those detected by the sensors described above, and the type of attachment 8 connected to the arm 6.

According to the present invention, the lifting vehicle 1 further comprises an obstacle detection and display system, the features of which are described below.

According to a first relevant feature, an on-board vision system is provided including at least one detection device (for example a camera, lidar, infrared sensor, and/or the like) mounted on at least one part of the vehicle (for example on one or more parts of the base frame 2 and/or on one or more parts of the slewing turret), configured to acquire data on the scenario surrounding the vehicle and on events occurring outside the vehicle.

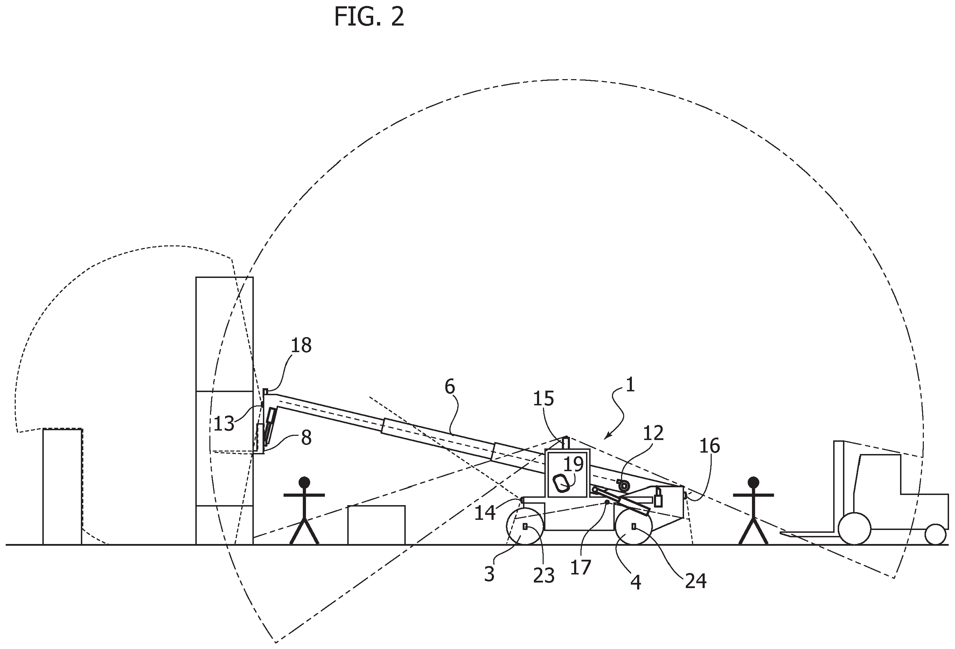

As shown in Figures 1 and 2, the vision system may comprise a first detection device 13 mounted at the end of the arm 6 near the coupling 7 for connecting the attachment 8.

The vision system may comprise a front detection device 14 mounted on a front portion of the frame 2, so as to acquire images of the scenario in front of the frame 2, at a height lower than that acquired by the first detection device 13.

The vision system may comprise a wide-range detection device 15 mounted on the top of the vehicle, in particular above the upper horizontal wall defining the driving cab of the vehicle 1.

The vision system may comprise a rear detection device 16 mounted on a rear terminal portion of the frame 2, so as to acquire images of the scenario behind the vehicle 1.

The vision system may comprise lateral detection devices 17 mounted along a respective side flank of the frame 2.

Naturally, the terms front, rear and lateral refer to the condition of the vehicle operating on the ground, for example as shown in Figure 1.

One or more of said devices 13, 14, 15, 16, 17, in particular the wide-range detection device 15, may be 360° omnidirectional cameras to maximize the field of view covered by the camera lens.

The vision system may further comprise a second detection device 18 positioned at the end of the arm 6 near the coupling 7 for connecting the attachment 8, configured to determine the distance of an object external to the vehicle 1, possibly detected by other detection devices. Figure 2 is a schematic view of the vehicle highlighting the field of view generated by the individual devices as described above.

In light of the features described above, it will therefore be appreciated that the vehicle 1 is provided with instrumentation adapted to generate a complete mapping of the surrounding scenario, not limited to a mere geometric representation of the environment, so as to make available a multitude of data to be displayed, optionally after processing. In one or more embodiments, said mapping is contextualized to the operating conditions of the lifting vehicle, taking into account both the nature of the detected obstacles and the physical characteristics of the surrounding environment, in particular the ground on which the vehicle operates.

According to the present invention, the obstacle detection and display system further comprises at least one electronic module F, optionally provided with artificial intelligence, arranged and configured to process a plurality of data acquired by said at least one detection device, in order to:
- recognize the nature of one or more detected obstacles (objects, people, animals), and one or more characteristics of the surrounding environment (depressions, bumps, significant ground inclinations, etc.);
- determine position and distance, with respect to the vehicle, of the detected obstacle and/or of the characteristics of the surrounding environment,
- such that said information can be used to assess the impact of ground conditions and of the nature of the obstacles on the stability of the vehicle, on driving manoeuvres and on the management of the load lifted.

In one or more embodiments, the electronic module F is configured to recognize the nature of obstacles according to a general classification comprising objects, people and animals as distinct categories. A structured recognition of the nature of obstacles as distinct and relevant categories for subsequent processing is thus provided.

For recognizing the characteristics of the surrounding environment, the control module F is configured for a structured recognition of geomorphological characteristics of the ground on which the vehicle moves.

The obstacle detection and display system further comprises a display device 19 -shown in Figures 1, 2 and 3- operatively connected to said electronic module F, configured and programmed to generate a visualization of the surrounding environment, highlighting the recognized and processed obstacles.

The electronic module F is further operatively connectable to the electronic control unit E of the vehicle 1 and to the related control system including one or more of said sensors, also with a view to implementing safety logic as detailed below.

According to a further preferred feature, the obstacle visualization may be defined by the operator using the display device 19, in particular by selecting a preferred viewing area with respect to the vehicle 1 (for example, the operator defines the preferred viewing area, e.g., the rear portion of the vehicle), or may be automatically set by the electronic module F based on the most imminent danger (closest obstacle in the direction of motion of the vehicle).

In this respect, in one or more embodiments, the electronic module F is configured to receive a plurality of data detected by the vision system and to process said data in order to generate, through the display device 19, a visualization of the surrounding environment and of the vehicle, so as to facilitate in real time the driving of the vehicle and the management of the load.

In light of the above features of the obstacle detection and display system, in all embodiments the vehicle 1 is therefore arranged to:
- acquire (through the vision system / sensors), and process (through the electronic module F), a plurality of data relating to events and/or obstacles and/or characteristics of the surrounding environment, during real-time use of the vehicle, and
- implement safety logic such as slowing down, trajectory variations and/or stopping of the vehicle 1 and/or parts thereof (e.g. telescopic arm, stabilizers, etc.), and various acoustic and visual warnings to alert the on-board operator or personnel outside.

In one or more embodiments, said safety logic is selected and modulated as a function of both the nature of the recognized obstacle and the detected physical characteristics of the surrounding environment.

The acquired and processed data may be transmitted automatically, for example wirelessly or via cable, to the display device 19.

It will therefore be appreciated that, for performing manoeuvres associated with the above safety logic, the obstacle detection and display system is configured for data transmission/reception with the control unit E of the vehicle 1. In this respect, the electronic module F may advantageously be configured and programmed to provide the vehicle control system with data on the position and distance of the perceived obstacles and any classification/colour-coding thereof.

According to a further feature, the operator may decide whether to activate or deactivate the functions described above, completely or partially, both with regard to the visualization of obstacles and environmental characteristics and with regard to the safety logic. For example, the operator may therefore visualize obstacles in front of the vehicle without activating the slowing/stopping functions. The operator may further opt for a "hybrid" activation with respect to different observation points; for example, for a first observation point to deactivate the slowing/stopping functions, and for a second observation point to keep all functions active.

The visualization generated by the display device 19 can be freely selected by an operator through at least one control element associated with the display device 19, so as to change the observation point with respect to the vehicle 1.

The electronic module F can also be configured to automatically select a certain visualization mode relative to a certain observation point with respect to the vehicle 1, based on the most imminent danger determined by the closest obstacle in the direction of motion of the vehicle.

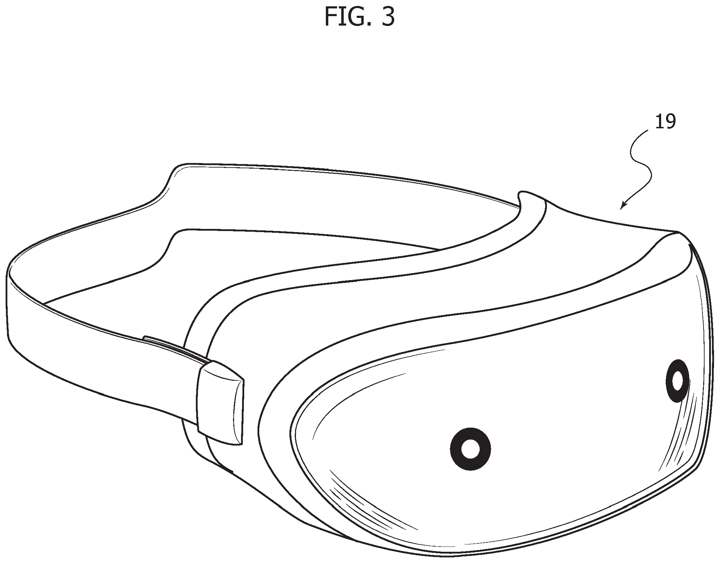

According to a possible embodiment shown in Figure 3, the display device 19 is a mixed reality visor of the head-up display type with video pass-through, wearable by an operator on the face. Alternatively, the display device 19 can be made in the form of a more traditional graphical interface, such as a fixed or removable screen in the driving cab.

The display device 19 may further comprise its own electronic processor (not shown) operatively communicating with the electronic control unit E of the vehicle, the vision system, the electronic module F, and any other devices in the vehicle command station, on-board or remote.

According to a further feature, the electronic module F of the vehicle 1 and/or the processor of the display device 19 are configured to use automatic data analysis algorithms based on machine learning principles, in order to integrate the acquired data, identify and recognize the nature of the obstacle (objects, people, animals) and of the surrounding environment (depressions, bumps, etc.), determine distance and position thereof with respect to the vehicle, and provide the user with a visualization of the environment with the obstacles highlighted, for example with different colours as a function of distance from the vehicle.

As known, the operator seated inside the driving cab of the vehicle or at a remote station may in some cases have the view obstructed by objects interposed along the field of view. In particular, external objects or parts of the vehicle itself such as, for example, the front uprights forming the driving cab, may prevent complete visibility of the external environment from various angles, thereby generating non-negligible difficulties in manoeuvring the vehicle or in handling the load lifted at the end of the lifting arm, while meeting safety and stability requirements.

In this respect, the safety logic already indicated above is therefore implemented, such as slowing down, trajectory variations and/or stopping of the vehicle 1 and/or parts thereof, and acoustic and visual warnings to alert the on-board operator or personnel outside.

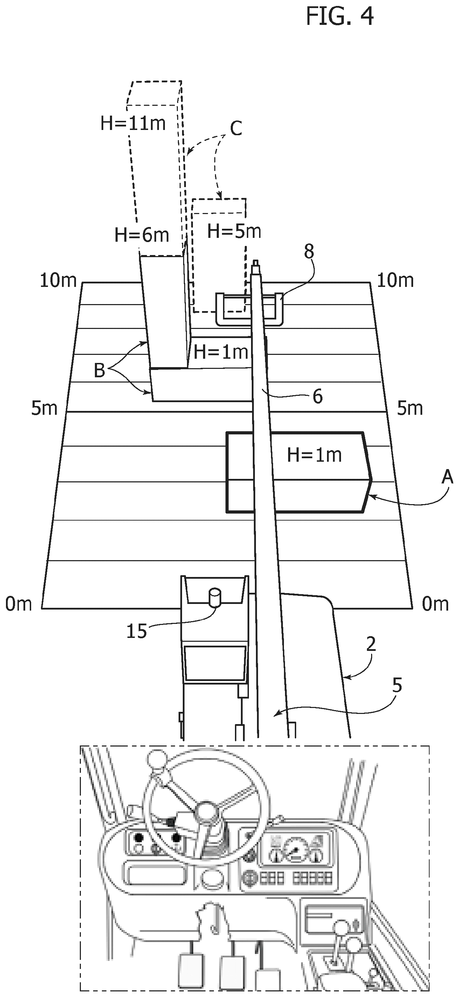

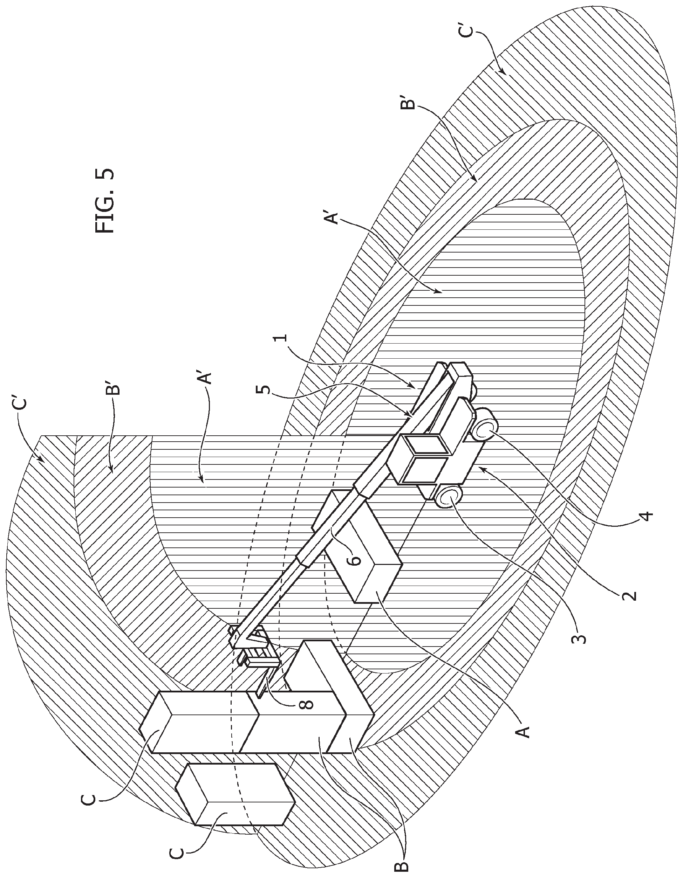

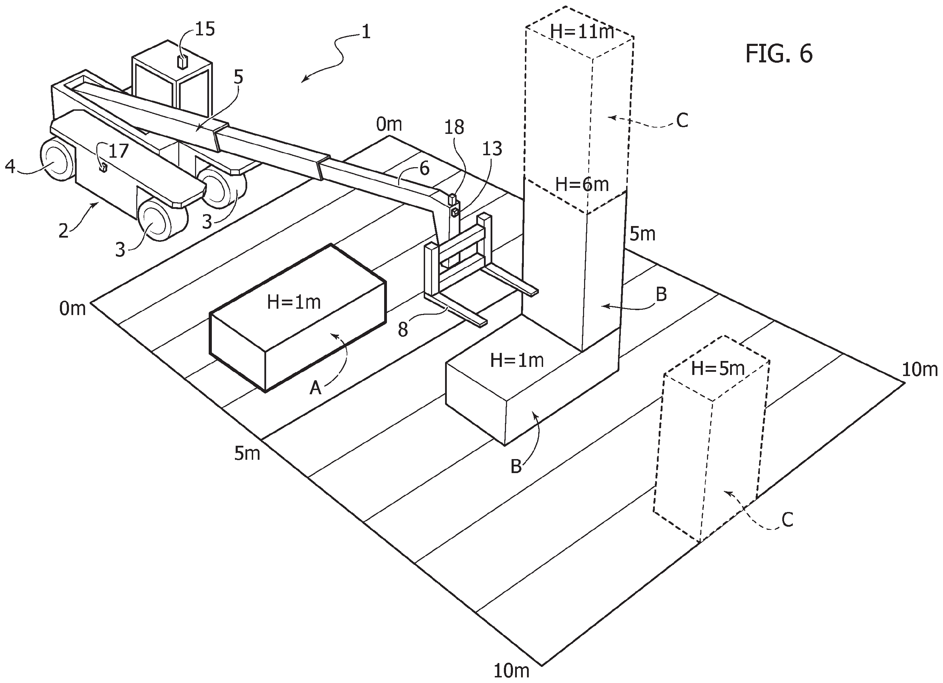

As indicated above, the display device 19 may be configured to provide the user with a visualization of the environment with the obstacles highlighted, for example with different colours as a function of the distance from the vehicle. In this respect, with reference to Figures 4-6, an obstacle may be displayed with corresponding colour-coding, in particular:
- obstacles A in a high-risk zone A' (for example displayed in red), reachable by the vehicle in the current condition or immediately reachable with small movements of the vehicle or parts thereof, in particular the arm;
- obstacles B in a medium-risk zone B' (for example displayed in yellow), at a greater distance than the high-risk zone A', but reachable by the vehicle within a few manoeuvres; and
- obstacles C in a low-risk zone C' (for example displayed in green), distant from the vehicle but nevertheless to be reported in order to prevent dangerous approaches.

In one or more embodiments, the vehicle is configured to implement the following safety logic in relation to the above obstacles A, B, C:
- stopping the vehicle or parts thereof when obstacles A in a high-risk zone A' are displayed;
- slowing down the vehicle or parts thereof when obstacles B in a medium-risk zone B' are displayed, in the absence of obstacles A;
- the display of obstacles C in a low-risk zone C', in the absence of obstacles A and B, does not cause limitations to the permitted operations of the vehicle or parts thereof.

The calculation of zones A', B', C' relating to obstacles A, B, C originates from the multitude of acquired data processed by the electronic module F.

In one or more embodiments, the combination of recognizing the nature of the obstacles and recognizing the physical characteristics of the surrounding environment makes it possible to provide the operator with more reliable decision support during driving and load-handling manoeuvres, reducing uncertainty situations and improving the operational safety of the lifting vehicle. This technical effect is particularly advantageous in operating conditions in which vehicle stability and manoeuvre safety depend not only on the presence of obstacles, but also on the ground conditions on which the vehicle operates.

Naturally, without prejudice to the principle of the invention, the constructional details and the embodiments may vary widely with respect to what has been described and illustrated purely by way of example, without thereby departing from the scope of the present invention as defined by the appended claims.

## Claims

1. Multifunctional lifting vehicle (1) comprising:
- a base frame (2),
- a lifting unit (5) including at least one operating arm (6) provided with a coupling (7) for mounting an attachment (8),
- a control system comprising at least one electronic control unit (E) and a plurality of sensors (11,12,20,21,23,24) arranged to acquire a plurality of parameters relating to a load and/or to parts of the vehicle (1), such as the arm (6),
- an obstacle detection and display system comprising:
- a vision system including at least one detection device (13,14,15,16,17) mounted on at least one part of the vehicle (1), arranged to acquire data on the scenario surrounding the vehicle and on the events occurring outside the vehicle,
- at least one electronic module (F) configured to process a plurality of data acquired by said at least one detection device (13,14,15,16,17), in order to:
- recognize the nature of one or more detected obstacles, such as objects, people, animals,
- recognize one or more characteristics of the surrounding environment, such as depressions, bumps, or significant ground inclinations, and
- determine the position and distance, with respect to the vehicle (1), for each detected obstacle and/or for each characteristic of the surrounding environment,
- a display device (19) operatively connected to said electronic module (F), configured and programmed to generate a visualization of the surrounding environment, highlighting the recognized and processed obstacles, so as to facilitate real-time driving of the vehicle (1) and load management,
- wherein said obstacle detection and display system is further configured to implement safety logics such as slowing down, trajectory variation, and/or stopping of the vehicle (1) or of parts thereof.

2. Multifunctional lifting vehicle (1) according to claim 1, wherein said obstacle detection and display system is configured to enable complete or partial deactivation of the obstacle visualization and/or the safety logics, for one or more observation points with respect to the vehicle (1), in such a way as to enable a "hybrid" activation with respect to different observation points, wherein for a first observation point the safety logics are deactivated despite the visualization of obstacles, and for a second observation point both the obstacle visualization and the safety logics remain active.

3. Multifunctional lifting vehicle (1) according to claim 1, wherein the visualization generated by the display device (19) can be freely selected by an operator through at least one control element associated with the display device (19), so as to change the observation point with respect to the vehicle (1).

4. Multifunctional lifting vehicle (1) according to claim 1, wherein the electronic module (F) is configured to automatically select a certain visualization mode relative to a certain observation point with respect to the vehicle (1), based on the most imminent danger determined by the closest obstacle in the direction of motion of the vehicle (1).

5. Multifunctional lifting vehicle (1) according to claim 1, **characterized in that** the electronic module (F) is configured to use automatic data analysis algorithms based on machine learning principles, in order to perform a constant and in-depth assessment of the surrounding environment, by exploiting a neural network that continuously learns from historical and real-time data.

6. Multifunctional lifting vehicle (1) according to claim 1, wherein, based on the determined distances, the electronic module (F) is also programmed to divide the surrounding environment into different zones (A',B',C') with different risk levels, depending on the detected obstacles and the position of the vehicle (1).

7. Multifunctional lifting vehicle (1) according to claim 6, **characterized in that** the display device (19) is configured to provide the user with a visualization of the environment with obstacles marked in different colors depending on their distance from the vehicle, in particular according to the following classification:
- obstacles A in a high-risk zone (A'), reachable by the vehicle (1) in its current condition or immediately reachable with small movements of the vehicle (1) or parts thereof, particularly the arm (6),
- obstacles B in a medium-risk zone (B'), at a greater distance than the high-risk zone (A'), and included within a range easily reachable by the vehicle (1),
- obstacles C in a low-risk zone (C'), distant from the vehicle (1) and to be reported in order to prevent dangerous approaches.

8. Multifunctional lifting vehicle (1) according to claim 6, wherein the following safety logics are implemented:
- stopping the vehicle (1) or parts thereof when obstacles A in a high-risk zone (A') are displayed;
- slowing down the vehicle (1) or parts thereof when obstacles B in a medium-risk zone (B') are displayed, in the absence of A obstacles;
- wherein the display of obstacles C in a low-risk zone (C'), in the absence of A and B obstacles, does not cause limitations to permitted operations.

9. Multifunctional lifting vehicle (1) according to claim 1, wherein the electronic module (F) is configured and programmed to provide the vehicle control system with data on the position and distance of the perceived obstacles and with a classification thereof based on possible risks associated with the real-time manoeuvres of the vehicle (1).

10. Multifunctional lifting vehicle (1) according to claim 1, wherein the display device (19) is a mixed reality visor of the head-up display type with video pass-through, wearable by an operator on the face.

11. Multifunctional lifting vehicle (1) according to claim 1, wherein the electronic control unit (E) is configured to define the overall dimensions and the working area of the vehicle (1) based on various operational parameters of the vehicle, including those detected by the sensors, and on the type of attachment (8) connected to the arm (6).

12. Multifunctional lifting vehicle (1) according to claim 1, wherein the vision system comprises at least some of the following:
- a first detection device (13) mounted at the end of the arm (6) near the coupling (7) for connecting the attachment (8),
- a front detection device (14) mounted on a front part of the frame (2), for acquiring images of the scenario in front of the frame (2),
- a wide-range detection device (15) mounted on the top of the vehicle, in particular above a horizontal top wall defining a cab of the vehicle (1),
- a rear detection device (16) mounted on a rear end part of the frame (2), for acquiring images of the scenario behind the vehicle (1),
- lateral detection devices (17) respectively mounted along a side flank of the frame (2),
- a second detection device (18) positioned at the end of the arm (6).

13. Method for detecting and displaying obstacles during a command phase of a multifunctional lifting vehicle (1) according to any one of the preceding claims, comprising:
- activating the vision system;
- controlling the vehicle (1) from inside a driving cab of said vehicle (1) or from a remote station;
- recognizing the nature of one or more detected obstacles, such as objects, people, animals, and one or more characteristics of the surrounding environment, such as depressions, bumps, and significant ground inclinations;
- determining position and distance, with respect to the vehicle (1), for each detected obstacle and/or for each characteristic of the surrounding environment;
- generating a visualization of the surrounding environment, highlighting the recognized and processed obstacles, so as to facilitate in real time the driving of the vehicle (1) and the management of the load;
- implementing safety logics such as slowing down, trajectory variation and/or stopping of the vehicle (1) or of parts thereof.
